(19) **Europäisches Patentamt / European Patent Office / Office européen des brevets**

(11) **EP 2 675 170 A2**

(12) **EUROPEAN PATENT APPLICATION**

(43) Date of publication:
**18.12.2013 Bulletin 2013/51**

(51) Int Cl.:
**H04N 9/31** (2006.01)

(21) Application number: **13171528.6**

(22) Date of filing: **11.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.06.2012 JP 2012132370**

(71) Applicant: **CANON KABUSHIKI KAISHA**
**Ohta-ku**
**Tokyo 146-8501 (JP)**

(72) Inventor: **Kitashou, Tetsurou**
**Ohta-ku, Tokyo (JP)**

(74) Representative: **Reinders, Christian**
**Canon Europe Ltd**
**European Patent Department**
**3 The Square**
**Stockley Park**
**Uxbridge, Middlesex UB11 1ET (GB)**

(54) **Movie processing apparatus and control method therefor**

(57) An output image obtained by executing an image deformation process for an input image is stored in a memory. In the output image in the memory, a partial image within an effective area set in the memory is specified, and an area including the specified partial image is calculated as a readout area. The partial image is read out by executing a readout process for the readout area in the memory.

FIG. 2

EP 2 675 170 A2

## Description

BACKGROUND OF THE INVENTION

Field of the Invention

The present invention relates to a movie processing technique for executing an image deformation process.

Description of the Related Art

As an application of a projector or the like, for example, a geometric process is executed. A projector requires this geometric process to correct distortion on a projection plane, which occurs depending on its installation angle, and is generally known as a keystone correction process or trapezoid distortion correction process. There are mainly two methods for implementing the above geometric process. One of them will be referred to as a memory read deformation method, and the other will be referred to as a memory write deformation method hereinafter.

A process by the memory read deformation method is characterized by execution of an image deformation process when reading out data from a frame memory. More specifically, after storing one screen of an input image in the frame memory, weighting of a pixel near input image coordinates corresponding to each set of coordinates of an output image is calculated. As a weighting calculation method, for example, a method such as the bicubic method is generally known. After weighting, an image deformation process is completed by reading out a pixel near input image coordinates corresponding to each set of coordinates of the output image from the frame memory, performing a convolution operation in consideration of the above weighting, and generating each pixel of the output image.

On the other hand, a process by the memory write deformation method is characterized by execution of an image deformation process when writing data in the frame memory. More specifically, a pixel position of an output image corresponding to each pixel of an input image is calculated, and weighting of a pixel near each set of input image coordinates is calculated. As a weighting calculation method, the bicubic method or the like can be used, similarly to the memory read deformation method. A convolution operation is performed for a pixel near input image coordinates corresponding to each pixel position of the output image in consideration of the above weighting, and each pixel of the output image is generated and written in the frame memory. After that, a deformed output image is obtained by sequentially reading out and outputting the pixels from the frame memory. A more practical process example is disclosed in, for example, Japanese Patent No. 3394551.

The image deformation process requires frequent access to the frame memory capable of storing an image of one screen because the scan order of an input image is different from that of an output image. The frame memory is usually implemented by a dynamic RAM on an integrated circuit. Along with a recent increase in resolution and frame rate of an image, the number of memory access operations increases, thereby raising the power consumption.

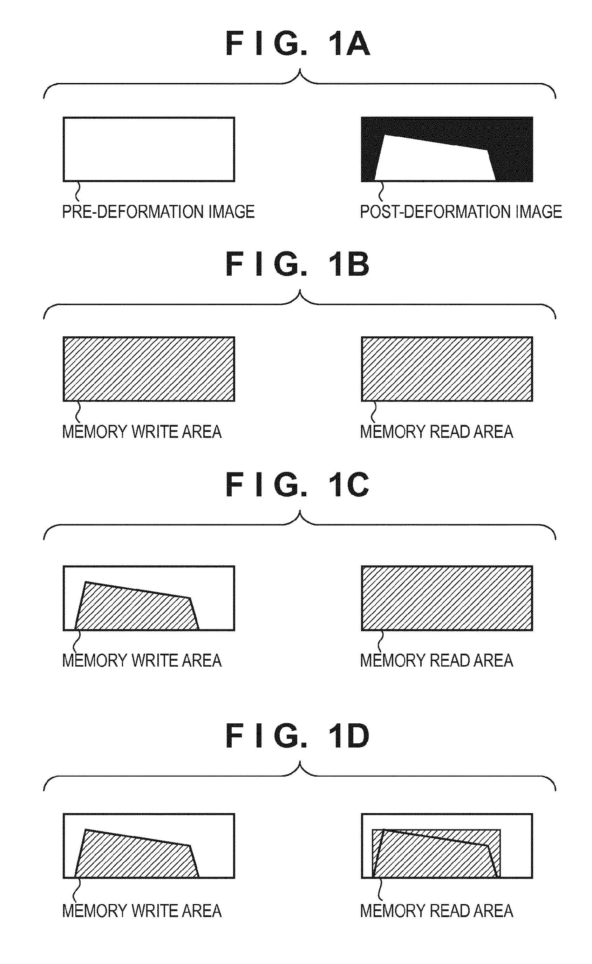

The memory read deformation method and the memory write deformation method described above will be compared with respect to a memory access area. Fig. 1A shows examples of images before and after deformation, in which a pre-deformation image is shown on the left side and a post-deformation image is shown on the right side. In Fig. 1A, a rectangular image represents a pre-deformation image, and an image obtained by deforming the rectangular image into a trapezoidal image represents a post-deformation image.

Fig. 1B shows a memory access area in the memory read deformation method in this case. A hatched portion represents a memory access area. As described above, since the memory read deformation method stores one screen of an input image in the frame memory, and then executes a deformation process by reading out the entire area, memory access for two screens occurs.

On the other hand, Fig. 1C shows a memory access area in the memory write deformation method. A hatched portion represents a memory access area. As described above, since the memory write deformation method deforms an input image before storing it, and sequentially reads out and outputs pixels from the frame memory, memory access for less than two screens occurs. More specifically, memory write of a trapezoidal shape and memory read of a rectangular shape of one screen occur.

In either case, however, memory access for about two screens is necessary. To keep up with a recent increase in resolution and frame rate of an image, the power consumption rises due to an increase in number of memory access operations.

SUMMARY OF THE INVENTION

The present invention has been made in consideration of the above problem, and provides a technique for decreasing the number of access operations to a memory used for an image deformation process.

The present invention in its first aspect provides a movie processing apparatus as specified in claims 1 to 4.

The present invention in its second aspect provides a control method for a movie processing apparatus as specified in claim 5.

The present invention in its third aspect provides a computer-readable storage medium as specified in claim 6.

Further features of the present invention will become apparent from the following description of exemplary embodiments with reference to the attached drawings.

BRIEF DESCRIPTION OF THE DRAWINGS

Figs. 1A to 1D are views for explaining memory access for a deformed image;

Fig. 2 is a block diagram showing an example of the arrangement of an image deformation apparatus 215;

Figs. 3A and 3B are views for explaining a memory read area;

Figs. 4A and 4B are views each showing an area where a valid signal 242 is valid;

Figs. 5A to 5C are views for explaining a case in which an input image 228 is divided and processed; and

Figs. 6A and 6B are flowcharts each illustrating processing executed by a memory read area calculation unit 216.

DESCRIPTION OF THE EMBODIMENTS

Embodiments of the present invention will be described below with reference to the accompanying drawings. Note that the embodiments to be explained below provide examples when the present invention is practically implemented, and are practical examples of an arrangement defined in the appended claims.

[First Embodiment]

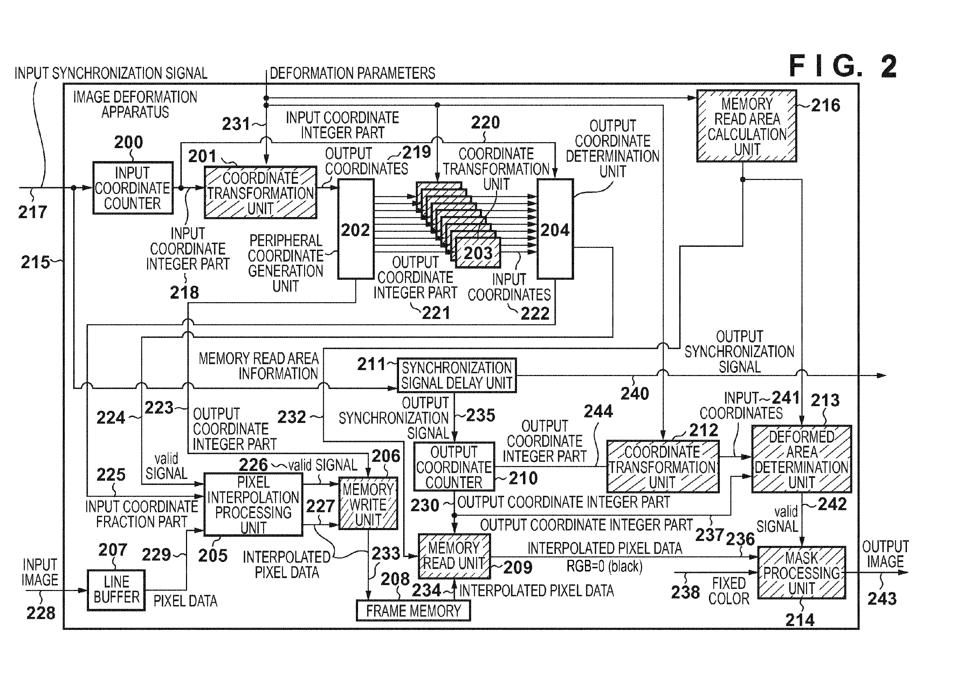

An example of the arrangement of an image deformation apparatus 215 as a movie processing apparatus according to the embodiment will be described with reference to a block diagram shown in Fig. 2. Note that the arrangement shown in Fig. 2 is an example of an arrangement for implementing each process to be explained below. Another arrangement can be adopted as long as it can implement a process similar to that to be described below. Although each function unit shown in Fig. 2 is formed by hardware in the following description, some or all of the units (except for memories) may be implemented by computer programs. In this case, when a computer program is stored in advance in an appropriate memory within the image deformation apparatus 215, and the control unit of the image deformation apparatus 215 reads out and executes the computer program, it is possible to implement the function of a corresponding function unit.

The image deformation apparatus 215 receives an input synchronization signal 217, an input image 228, and deformation parameters 231, and deforms the input image 228 into a shape designated by the deformation parameters 231, thereby outputting an output synchronization signal 240 and an output image 243.

The input synchronization signal 217 includes a vertical synchronization signal, a horizontal synchronization signal, and a pixel clock for indicating an effective area of one screen of the input image 228. The deformation parameters 231 are used to designate a deformed shape. The deformation parameters 231 include matrices S2D_MTX and D2S_MTX, the width in_width and height in_height of the input image, and the width ot_width and height ot_height of the output image. Furthermore, the deformation parameters 231 include the effective area start coordinates and effective area end coordinates of the output image 243. These parameters will be shown below. Note that the matrix S2D_MTX is a matrix for transforming input coordinates into output coordinates. The matrix D2S_MTX is the inverse matrix of the matrix S2D_MTX, that is, a matrix for transforming output coordinates into input coordinates.

$$\text{S2D\_MTX} = \begin{bmatrix} m00 & m01 & m02 \\ m10 & m11 & m12 \\ m20 & m21 & m22 \end{bmatrix}$$

$$\text{D2S\_MTX} = \text{S2D\_MTX}^{-1}$$

input image width: in_width, input image height: in_height
output image width: ot_width, output image height: ot_height
effective area start coordinates of output image:

$$(ot\_bgn\_x, \ ot\_bgn\_y)$$

effective area end coordinates of output image:

$$(ot\_end\_x, \ ot\_end\_y) \qquad\qquad ...(1)$$

In this embodiment, for descriptive convenience, assume that the vertical and horizontal sizes of the input image 228 are respectively equal to those of the output image 243, and the entire area of the output image 243 is an effective area. This example is not a special case but a general case for deformation of an image of one screen. Details of this example are as follows:

input image width: in_width, input image height: in_height
output image width: in_width, output image height: in_height
effective area start coordinates of output image: (0, 0)
effective area end coordinates of output image:

$$(in\_width-1, \ in\_height-1) \qquad\qquad ...(2)$$

In this case, the coordinates of four input coordinate vertices, that is, the coordinates of the four corner positions of the input image are as follows:

$$input \ coordinate \ vertex \ 0: \ (src\_x, \ src\_y) = (0, 0)$$

$$input \ coordinate \ vertex \ 1: \ (src\_x, \ src\_y) = (in\_width-1, \ 0)$$

$$input \ coordinate \ vertex \ 2: \ (src\_x, \ src\_y) = (in\_width-1, \ in\_height-1)$$

$$input \ coordinate \ vertex \ 3: \ (src\_x, \ src\_y) = (0, in\_height-1) \qquad\qquad ...(3)$$

The input synchronization signal 217 is input to an input coordinate counter 200, which counts coordinates according to the pixel clock included in the input synchronization signal 217 and outputs the counted coordinates as a coordinate value (input coordinates) on the input image 228. More specifically, the input coordinate counter 200 outputs an input coordinate integer part 218 (src_x, src_y). Furthermore, each pixel of the input image 228 is input to a line buffer 207 in synchronism with the pixel clock, vertical synchronization signal, and horizontal synchronization signal.

A coordinate transformation unit 201 receives the input coordinate integer part 218 (src_x, src_y) and deformation parameters 231, and calculates the following equations using the received values, thereby calculating output coordinates 219 (dst_x, dst_y).

$$SRC\_POINT = \begin{bmatrix} src\_x \\ src\_y \\ 1 \end{bmatrix}$$

$$DST\_POINT = \begin{bmatrix} dst\_x \\ dst\_y \\ 1 \end{bmatrix} \qquad \cdots (4)$$

$$DST\_POINT = \frac{S2D\_MTX \cdot SRC\_POINT}{(S2D\_MTX \cdot SRC\_POINT)[2]}$$

where $(S2D\_MTX \cdot SRC\_POINT)[2]$ represents a scalar component in the third row of a 3 x 1 matrix as a calculation result of $(S2D\_MTX \cdot SRC\_POINT)$.

A peripheral coordinate generation unit 202 receives the output coordinates 219, and outputs, as an output coordinate integer part 221, the coordinates of each of nine pixels including a pixel having the integer part of the output coordinates 219 as coordinates and eight pixels (each having integer coordinates) adjacent to the pixel.

A coordinate transformation unit 203 calculates corresponding input coordinates 222 based on the output coordinate integer part 221 of each of the nine pixels by:

$$SRC\_POINT = \frac{D2S\_MTX \cdot DST\_POINT}{(D2S\_MTX \cdot DST\_POINT)[2]} \qquad \cdots (5)$$

where the above deformation parameters 231 are used.

An output coordinate determination unit 204 receives an input coordinate integer part 220 output from the input coordinate counter 200, and nine sets of input coordinates 222 output from the coordinate transformation unit 203, and outputs a valid signal 224 and a fraction part 225 of each set of input coordinates 222.

The valid signal 224 is information indicating whether each set of input coordinates 222 is valid. If each set of input coordinates 222 is effective, a post-deformation pixel is generated based on each set of input coordinates 222. If the input coordinate integer part 220 coincides with the integer part of each set of input coordinates 222, the valid signal 224 is valid. The fraction part 225 of the input coordinates 222 is formed by a fraction part obtained by omitting the integer part from the input coordinates 222.

On the other hand, the input image 228 input to the image deformation apparatus 215 is input to the line buffer 207, which holds a plurality of lines of the input image 228 and then outputs pixel data 229 including an input pixel and its neighboring pixels. In this embodiment, assume that interpolation is performed by the bicubic method, and thus the pixel data 229 of 4 x 4 = 16 pixels is output.

The valid signal 224 and input coordinate fraction part 225 output from the output coordinate determination unit 204, and the pixel data 229 output from the line buffer 207 are input to a pixel interpolation processing unit 205, which then outputs a valid signal 226 and interpolated pixel data 227.

The pixel data 229 is data of 4 x 4 = 16 pixels, as described above. Interpolated pixel data 227 is data generated by interpolating the pixel data 229 by the bicubic method.

The valid signal 226 is obtained by holding the valid signal 224 for a period of time during which the pixel interpolation processing unit 205 generates the interpolated pixel data 227, and is a set of valid signals 224 for the respective pixels of the interpolated pixel data 227.

The valid signal 226 and interpolated pixel data 227 output from the pixel interpolation processing unit 205, and an output coordinate integer part 223 output from the peripheral coordinate generation unit 202 are input to a memory write unit 206.

The memory write unit 206 writes as interpolated pixel data 233 only data of a pixel, of the interpolated pixel data 227, for which a corresponding valid signal is valid, at an address on a frame memory 208 designated by the output coordinate integer part 223 corresponding to the pixel.

When the above processing is executed for all the pixel data of the input image 228, the post-deformation image is stored in the frame memory 208.

Processing after a readout process from the frame memory 208 will be described next.

The deformation parameters 231 input to the image deformation apparatus 215 are also input to a memory read area calculation unit 216, which then calculates memory read area information 232 using the deformation parameters 231, and outputs it. In this embodiment, a case in which the entire area of the output image is an effective area is exemplified. Therefore, the deformation parameters 231 are represented by:

$$S2D\_MTX = \begin{bmatrix} m00 & m01 & m02 \\ m10 & m11 & m12 \\ m20 & m21 & m22 \end{bmatrix}$$

$$D2S\_MTX = S2D\_MTX^{-1}$$

input image width: in_width, input image height: in_height
output image width: in_width, output image height: in_height
effective area start coordinates of output image: (0, 0)
effective area end coordinates of output image:

$$(in\_width-1, \ in\_height-1) \qquad\qquad ...(6)$$

In this case, using the four input coordinate vertices at this time, equations for calculating the four post-deformation vertices are represented as follows. More specifically, input coordinate vertices 0 to 3 are substituted into SRC_POINT to perform calculation according to the following equations, thereby setting, as post-deformation vertices, coordinates obtained as DST_POINT.

```
        input coordinate vertex 0: (src_x, src_y) = (0,

0)

        input coordinate vertex 1: (src_x, src_y) =

(in_width-1, 0)

        input coordinate vertex 2: (src_x, src_y) =

(in_width-1, in_height-1)

        input coordinate vertex 3: (src_x, src_y) = (0,

in_height-1)
```

$$SRC\_POINT = \begin{bmatrix} src\_x \\ src\_y \\ 1 \end{bmatrix}$$

$$DST\_POINT = \begin{bmatrix} dst\_x \\ dst\_y \\ 1 \end{bmatrix}$$

$$DST\_POINT = \frac{S2D\_MTX \cdot SRC\_POINT}{(S2D\_MTX \cdot SRC\_POINT)[2]} \qquad \ldots (7)$$

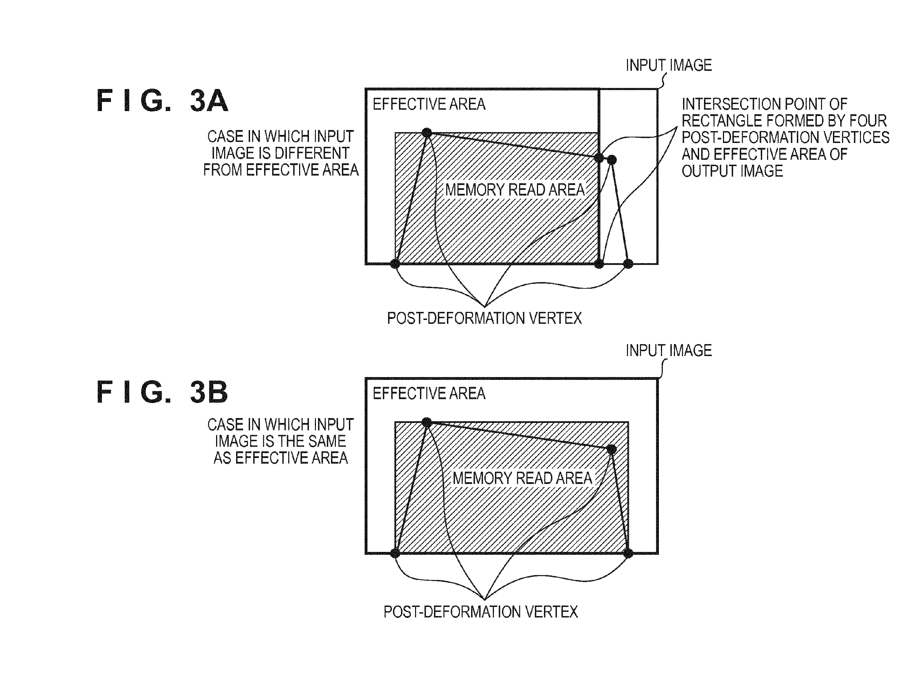

Based on the calculated four post-deformation vertices, the memory read area information 232 is calculated. The memory read area information 232 is information indicating an area including the post-deformation vertices existing within the effective area of the output image 243, and intersection points of a rectangle formed by the four post-deformation vertices and the effective area of the output image. The relationship is shown in Figs. 3A and 3B.

Fig. 3A shows a case in which the size of the input image is different from that of the effective area. On the other hand, Fig. 3B shows a case in which the size of the input image is equal to that of the effective area. In this embodiment, the case shown in Fig. 3B is applied. Note that a description of Fig. 3A will be provided later as the second embodiment.

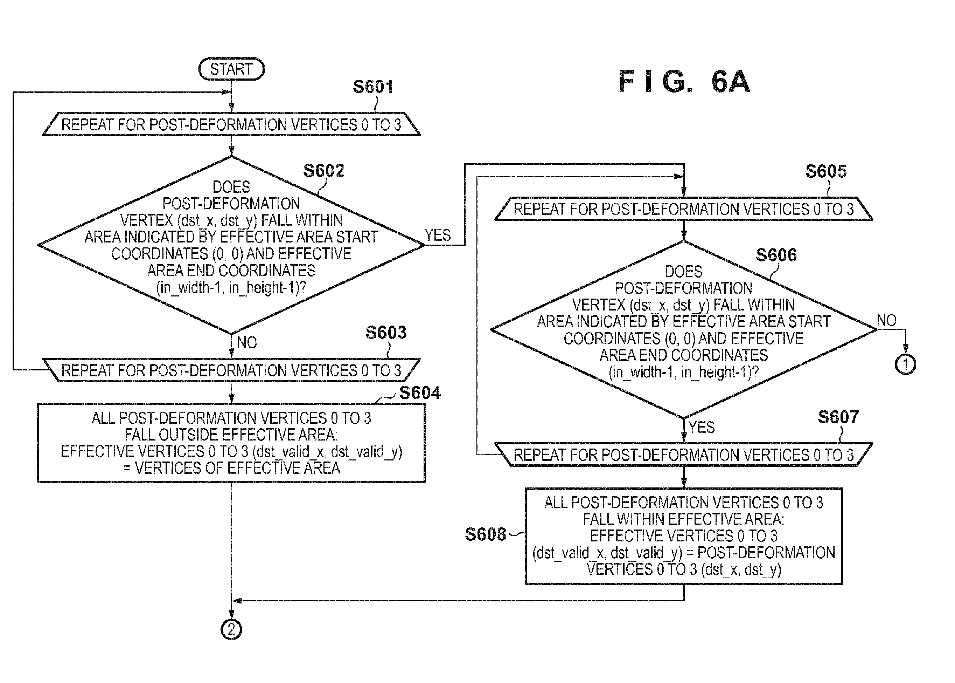

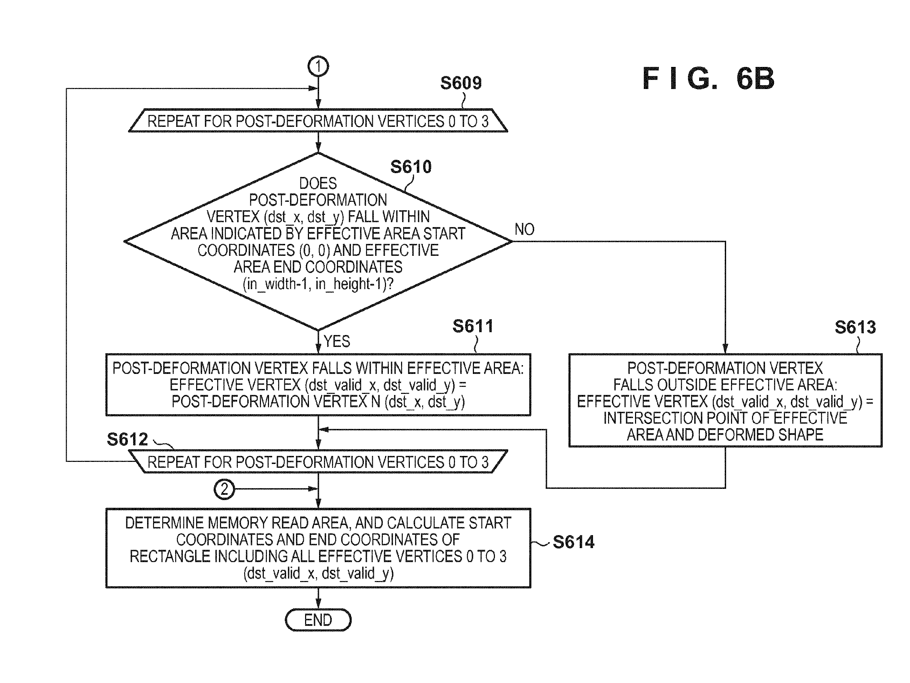

Processing executed by the memory read area calculation unit 216 to obtain the memory read area information 232 will be described with reference to Figs. 6A and 6B each of which is a flowchart illustrating the processing. Assume that when the processing according to the flowcharts shown in Figs. 6A and 6B starts, the coordinates of the four post-deformation vertices have been calculated.

Processing in steps S601 to S603 is performed for each of post-deformation vertices 0 to 3. If, however, the memory read area calculation unit 216 determines in step S602 that the coordinates (dst_x, dst_y) of a post-deformation vertex X ($0 \le X \le 3$) fall within the effective area of the output image, the process advances to step S605. If it is determined that the coordinates (dst_x, dst_y) of each of all post-deformation vertices 0 to 3 fall outside the effective area of the output image, the process advances to step S604 through step S603.

In step S604, since all post-deformation vertices 0 to 3 fall outside the effective area, the memory read area calculation unit 216 sets the four vertices of the effective area as effective vertices 0 to 3 indicating the vertices of the deformed shape within the effective area.

Processing in steps S605 to S607 is executed for each of post-deformation vertices 0 to 3. If, however, the memory read area calculation unit 216 determines in step S606 that the coordinates (dst_x, dst_y) of the post-deformation vertex X ($0 \le X \le 3$) fall outside the effective area of the output image, the process advances to step S609. Alternatively, if it is determined that the coordinates (dst_x, dst_y) of each of all post-deformation vertices 0 to 3 fall within the effective area of the output image, the process advances to step S608 through step S607.

In step S608, since all post-deformation vertices 0 to 3 fall within the effective area, the memory read area calculation unit 216 sets post-deformation vertices 0 to 3 as effective vertices 0 to 3 indicating the vertices of the deformed shape within the effective area.

Processing in steps S609 to S612 is executed for each of post-deformation vertices 0 to 3. If, however, the memory read area calculation unit 216 determines in step S610 that the coordinates (dst_x, dst_y) of the post-deformation vertex X (0 ≤ X ≤ 3) fall within the effective area of the output image, the process advances to step S611. On the other hand, if it is determined that the coordinates (dst_x, dst_y) of the post-deformation vertex X (0 ≤ X ≤ 3) fall outside the effective area of the output image, the process advances to step S613.

In step S611, the memory read area calculation unit 216 sets the post-deformation vertex X as an effective vertex X indicating a vertex of the deformed shape within the effective area. On the other hand, in step S613, the memory read area calculation unit 216 sets, as a target side, one of sides, among the sides of the post-deformation area formed by the four post-deformation vertices, which have the post-deformation vertex X as one end point and intersect the effective area. The unit 216 then calculates the intersection point of the target side and the effective area, and sets it as the effective vertex X indicating the vertex of the deformed shape within the effective area.

In step S614, the memory read area calculation unit 216 calculates a rectangular area including all calculated effective vertices 0 to 3, and then calculates the coordinates of diagonal vertices (for example, the coordinates of the vertex at the upper left corner and the vertex at the lower right corner) of the rectangular area as start coordinates and end coordinates, respectively. This rectangular area will be referred to as a memory read area. The memory read area calculation unit 216 outputs the memory read area information 232 including the start and end coordinates of the memory read area. Note that the area represented by the memory read area information 232 is indicated by a hatched portion shown in Fig. 3A or 3B.

A synchronization signal delay unit 211 receives an input synchronization signal 217, and delays it by a given time, thereby outputting it as an output synchronization signal 235. This processing is executed to control the timing of writing data in the frame memory 208 and reading out data from the frame memory 208 not to cause the readout operation to pass the write operation.

An output coordinate counter 210 receives the output synchronization signal 235, and counts coordinates according to a clock included in the output synchronization signal 235, thereby outputting the counted coordinates as a coordinate value (output coordinates) on the output image 243. More specifically, the counter 210 outputs the output coordinate integer parts 230, 237, and 244.

A memory read unit 209 receives the output coordinate integer part 230 and the memory read area information 232, and reads out interpolated pixel data 234 from the frame memory 208, thereby outputting it to the succeeding stage. More specifically, if the output coordinate integer part 230 represents coordinates within the area indicated by the memory read area information 232, the unit 209 reads out, as the interpolated pixel data 234, a pixel stored at an address corresponding to the coordinates in the frame memory 208. A practical example of the memory read area information 232 is shown in Fig. 3A or 3B.

A coordinate transformation unit 212 receives the deformation parameters 231 and the output coordinate integer part 244, and transforms the output coordinate integer part 244 into input coordinates 241 using the deformation parameters 231, thereby outputting them. This transformation is represented by:

$$\mathbf{SRC\_POINT} = \begin{bmatrix} src\_x \\ src\_y \\ 1 \end{bmatrix}$$

$$\mathbf{DST\_POINT} = \begin{bmatrix} dst\_x \\ dst\_y \\ 1 \end{bmatrix} \qquad \ldots (8)$$

$$\mathbf{SRC\_POINT} = \frac{\mathbf{D2S\_MTX} \cdot \mathbf{DST\_POINT}}{(\mathbf{D2S\_MTX} \cdot \mathbf{DST\_POINT})[2]}$$

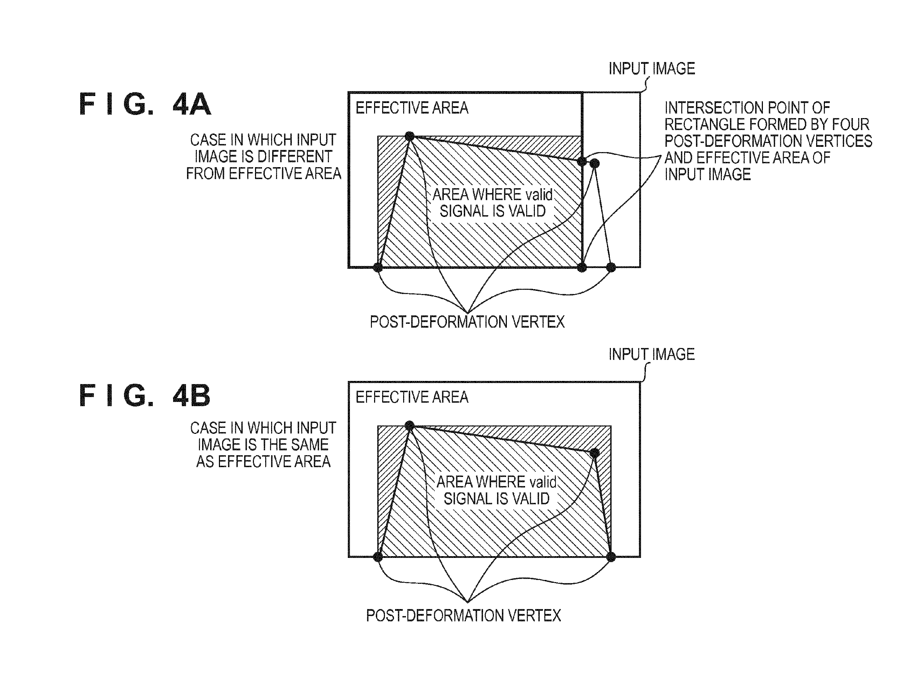

A deformed area determination unit 213 receives the input coordinates 241, output coordinate integer part 237, and memory read area information 232, and outputs a valid signal 242. When the input coordinates 241 fall within the area of the output image 243 and within the memory read area, the valid signal 242 is valid. Fig. 4A or 4B shows an area where the valid signal 242 is valid.

A mask processing unit 214 receives the valid signal 242, interpolated pixel data 236, and a fixed color 238, and outputs the output image 243. More specifically, the unit 214 refers to the corresponding valid signal 242 for each pixel. If the valid signal 242 referred to is valid, the unit 214 selects and outputs the interpolated pixel data 236; otherwise, the unit 214 selects and outputs the fixed color 238. The fixed color 238 is a color output to an area outside the deformed area. For example, black is output in keystone correction by a projector.

Note that as described above, the arrangement explained in this embodiment is merely an example, and only provides an example of the following arrangement. That is, an output image obtained by executing an image deformation process for an input image is stored in a memory. In the output image in the memory, a partial image within an effective area set in the memory is specified, and an area including the specified partial image is calculated as a readout area. The partial image is then read out by executing a readout process for the readout area in the memory.

[Second Embodiment]

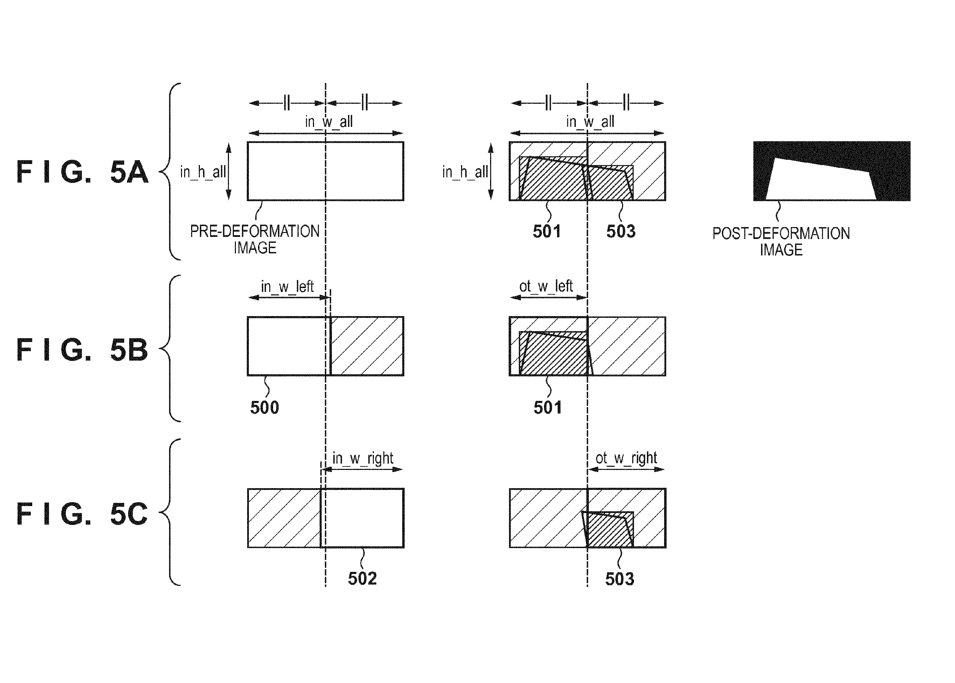

Processing of dividing an input image 228 and processing it will be described with reference to Figs. 5A to 5C. An example shown in Figs. 5A to 5C shows a case in which an image deformation process shown in Fig. 5A is divided into two processes for left and right portions. A case in which two individual chips respectively perform the divided processes is shown in this example. The division method is not limited to this, and two cores within one chip may perform the processes.

Fig. 5B shows the process for the left portion. Even if the overall deformation process is divided into two as shown in Fig. 5A, a size input on one side needs to be equal to or larger than half the entire size, as indicated by in_w_left in Figs. 5A to 5C. This is because, in order to output an output image having a size obtained by halving the horizontal size, a post-deformation area on one side needs to cross a process division boundary so that the divided areas are smoothly connected at this boundary. In this case, an area 501 indicates a memory read area.

A description will be provided by associating Figs. 5B and 3A with each other. The input image shown in Fig. 3A indicates an in_w_left x in_h_all area corresponding to a left area 500 shown in Fig. 5B. The effective area shown in Fig. 3A corresponds to an ot_w_left x in_h_all area shown in Fig. 5B. Furthermore, the memory read area shown in Fig. 3A corresponds to the memory read area 501 shown in Fig. 5B. A method of calculating the memory read area 501 is the same as the processing according to the flowcharts shown in Figs. 6A and 6B, and a description thereof will be omitted. This corresponds to the case shown in Fig. 3A. As described above, if a process is divided, the size of an input image may be different from that of the effective area of an output image. A process shown in Fig. 5C is the same as that shown in Fig. 5B, and a description thereof will be omitted.

Note that in either embodiment, the memory read area is not limited to a rectangular area, and may have an arbitrary shape.

According to each of the above embodiments, if, as shown in Fig. 1D, a memory access area has a post-deformation shape reduced with respect to the area of an output image like keystone correction or the like by a projector, the memory read area becomes smaller than that in the conventional method. This can reduce the memory bandwidth, and decrease the power consumption.

Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A movie processing apparatus **characterized by** comprising:

   means for storing an output image in a memory obtained by executing an image deformation process on an input image;
   calculation means for specifying in the stored output image a partial image within an effective area and calculating as a readout area an area including the specified partial image of the output image; and
   means for reading out the partial image of the output image by executing a readout process for the readout area stored in the memory.

2. The apparatus according to claim 1, **characterized in that** if at least four vertices of the output image fall within the effective area, said calculation means calculates, as the readout area, an area including the four vertices.

3. The apparatus according to claim 2, **characterized in that** if all the four vertices of the output image fall outside the effective area, said calculation means calculates the effective area as the readout area.

4. The apparatus according to any one of claims 1 to 3, **characterized in that** if at least one of the four vertices of the output image falls within the effective area, said calculation means calculates an intersection point of the effective area and one of sides, among sides of the output image, which have as one end point a vertex outside the effective area and intersect the effective area, and calculates, as the readout area, an area including the intersection point and the vertex falling within the effective area of the output image.

5. A control method for a movie processing apparatus, **characterized by** comprising:

a step of storing an output image in a memory obtained by executing an image deformation process on an input image;
a calculation step of specifying in the stored output image a partial image within an effective area and calculating as a readout area an area including the specified partial image of the output image; and
a step of reading out the partial image of the output image by executing a readout process for the readout area stored in the memory.

6. A computer-readable storage medium having computer-executable instructions to perform steps for providing a control method for a movie processing apparatus according to claim 5.

# F I G. 1A

PRE-DEFORMATION IMAGE          POST-DEFORMATION IMAGE

# F I G. 1B

MEMORY WRITE AREA          MEMORY READ AREA

# F I G. 1C

MEMORY WRITE AREA          MEMORY READ AREA

# F I G. 1D

MEMORY WRITE AREA          MEMORY READ AREA

FIG. 2

# FIG. 3A

CASE IN WHICH INPUT
IMAGE IS DIFFERENT
FROM EFFECTIVE AREA

INPUT IMAGE

EFFECTIVE AREA

INTERSECTION POINT OF
RECTANGLE FORMED BY FOUR
POST-DEFORMATION VERTICES
AND EFFECTIVE AREA OF
OUTPUT IMAGE

MEMORY READ AREA

POST-DEFORMATION VERTEX

# FIG. 3B

CASE IN WHICH INPUT
IMAGE IS THE SAME
AS EFFECTIVE AREA

INPUT IMAGE

EFFECTIVE AREA

MEMORY READ AREA

POST-DEFORMATION VERTEX

EP 2 675 170 A2

F I G. 4A

CASE IN WHICH INPUT IMAGE IS DIFFERENT FROM EFFECTIVE AREA

INPUT IMAGE

INTERSECTION POINT OF RECTANGLE FORMED BY FOUR POST-DEFORMATION VERTICES AND EFFECTIVE AREA OF INPUT IMAGE

EFFECTIVE AREA

AREA WHERE valid SIGNAL IS VALID

POST-DEFORMATION VERTEX

F I G. 4B

CASE IN WHICH INPUT IMAGE IS THE SAME AS EFFECTIVE AREA

INPUT IMAGE

EFFECTIVE AREA

AREA WHERE valid SIGNAL IS VALID

POST-DEFORMATION VERTEX

FIG. 5A {

in_w_all

in_h_all

PRE-DEFORMATION IMAGE

501    503

POST-DEFORMATION IMAGE

FIG. 5B {

in_w_left

500

ot_w_left

501

FIG. 5C {

in_w_right

502

ot_w_right

503

EP 2 675 170 A2

# F I G. 6A

START

**S601**
REPEAT FOR POST-DEFORMATION VERTICES 0 TO 3

**S602**
DOES POST-DEFORMATION VERTEX (dst_x, dst_y) FALL WITHIN AREA INDICATED BY EFFECTIVE AREA START COORDINATES (0, 0) AND EFFECTIVE AREA END COORDINATES (in_width-1, in_height-1)?

YES →

NO ↓

**S603**
REPEAT FOR POST-DEFORMATION VERTICES 0 TO 3

**S604**
ALL POST-DEFORMATION VERTICES 0 TO 3 FALL OUTSIDE EFFECTIVE AREA: EFFECTIVE VERTICES 0 TO 3 (dst_valid_x, dst_valid_y) = VERTICES OF EFFECTIVE AREA

**S605**
REPEAT FOR POST-DEFORMATION VERTICES 0 TO 3

**S606**
DOES POST-DEFORMATION VERTEX (dst_x, dst_y) FALL WITHIN AREA INDICATED BY EFFECTIVE AREA START COORDINATES (0, 0) AND EFFECTIVE AREA END COORDINATES (in_width-1, in_height-1)?

NO → ①

YES ↓

**S607**
REPEAT FOR POST-DEFORMATION VERTICES 0 TO 3

**S608**
ALL POST-DEFORMATION VERTICES 0 TO 3 FALL WITHIN EFFECTIVE AREA: EFFECTIVE VERTICES 0 TO 3 (dst_valid_x, dst_valid_y) = POST-DEFORMATION VERTICES 0 TO 3 (dst_x, dst_y)

②

① S609

REPEAT FOR POST-DEFORMATION VERTICES 0 TO 3

S610

DOES
POST-DEFORMATION
VERTEX (dst_x, dst_y) FALL WITHIN
AREA INDICATED BY EFFECTIVE AREA START
COORDINATES (0, 0) AND EFFECTIVE
AREA END COORDINATES
(in_width-1, in_height-1)?

NO

YES

S611

POST-DEFORMATION VERTEX FALLS WITHIN EFFECTIVE AREA:
EFFECTIVE VERTEX (dst_valid_x, dst_valid_y) =
POST-DEFORMATION VERTEX N (dst_x, dst_y)

S613

POST-DEFORMATION VERTEX
FALLS OUTSIDE EFFECTIVE AREA:
EFFECTIVE VERTEX (dst_valid_x, dst_valid_y) =
INTERSECTION POINT OF EFFECTIVE
AREA AND DEFORMED SHAPE

S612

REPEAT FOR POST-DEFORMATION VERTICES 0 TO 3

②

DETERMINE MEMORY READ AREA, AND CALCULATE START
COORDINATES AND END COORDINATES OF
RECTANGLE INCLUDING ALL EFFECTIVE VERTICES 0 TO 3
(dst_valid_x, dst_valid_y)

S614

END

EP 2 675 170 A2

## REFERENCES CITED IN THE DESCRIPTION

**Patent documents cited in the description**

- JP 3394551 B